Europäisches Patentamt

European Patent Office

Office européen des brevets

(19)

(11) **EP 0 303 548 B1**

(12) **FASCICULE DE BREVET EUROPEEN**

(45) Date de publication et mention
de la délivrance du brevet:
**05.11.1997 Bulletin 1997/45**

(51) Int Cl.⁶: **G09B 19/02**

(21) Numéro de dépôt: **88402099.1**

(22) Date de dépôt: **11.08.1988**

(54) **Machine à calculer pédagogique destinée notamment aux élèves des classes primaires**

Insbesondere für Schüler der ersten Klassen bestimmte Rechenmaschine für pädagogische Zwecke

Educational calculating device, especially for primary school children

(84) Etats contractants désignés:
**DE FR GB IT**

(30) Priorité: **13.08.1987 FR 8711552**

(43) Date de publication de la demande:
**15.02.1989 Bulletin 1989/07**

(73) Titulaires:
• **TEXAS INSTRUMENTS FRANCE**
**06270 Villeneuve Loubet (FR)**
Etats contractants désignés:
**FR**
• **TEXAS INSTRUMENTS INCORPORATED**
**Dallas Texas 75265 (US)**
Etats contractants désignés:
**DE GB IT**

(72) Inventeur: **Colombat,Hubert**
**F-06270 Villeneuve Loubet (FR)**

(74) Mandataire: **Obolensky, Michel et al**
**c/o CABINET LAVOIX**
**2, place d'Estienne d'Orves**
**75441 Paris Cédex 09 (FR)**

(56) Documents cités:
**GB-A- 2 130 782**      **US-A- 4 225 932**

## Description

La présente invention est relative aux calculatrices et se rapporte plus particulièrement aux calculatrices destinées à être utilisées par des enfants d'âge scolaire, fréquentant les écoles primaires.

Cette calculatrice est donc destinée à des élèves d'âge compris entre 8 et 14 ans.

Les enfants des écoles primaires reçoivent souvent un enseignement des mathématiques qui exige de l'enfant d'apprendre par coeur un certain nombre de notions fondamentales sans en comprendre les mécanismes.

Les machines à calculer dont l'utilisation est de plus en plus répandue dans les petites classes assurent un affichage résultant des opérations qu'elles effectuent sans donner à l'élève d'informations relatives à la manière d'effectuer une opération et à la méthode mise en oeuvre pour l'effectuer.

Par exemple, dans le cas de la division, la machine affiche sur son écran le quotient de la division sans que l'élève ne reçoive d'explications sur la manière dont ce quotient est obtenu.

Afin de remédier aux inconvénients des machines calculatrices de la technique antérieure, on a cherché à créer une machine à calculer destinée aux élèves des classes primaires qui soit susceptible de compléter, par les informations qu'elle affiche, l'enseignement donné à l'élève.

D'après GB-A-2 130 782, on connaît une machine à calculer comprenant un microprocesseur assurant la commande des opérations effectuées par la machine, une pile de registres à décalage associés au microprocesseur et destinés au stockage temporaire des nombres sur lesquels les opérations doivent être effectuées, une mémoire morte contenant les programmes relatifs aux fonctions de la machine, un contrôleur d'affichage associé au microprocesseur et à la mémoire morte, un écran d'affichage des résultats et des moyens pour faire apparaître sur l'écran d'affichage de la machine des informations pédagogiques relatives aux règles mathématiques auxquelles sont soumises les opérations effectuées par la machine, cette machine comprenant en outre des moyens pour effectuer une division euclidienne et son écran étant subdivisé en une zône d'affichage du quotient et une zone d'affichage du reste de la division euclidienne.

L'invention vise à créer une machine à calculer qui soit capable d'effectuer une plus grande variété d'opérations tout en assurant leur présentation didactique.

Elle a donc pour objet une machine à calculer comprenant un microprocesseur assurant la commande des opérations effectuées par la machine, une pile de registres à décalage associée au microprocesseur et destinée au stockage temporaire des nombres sur lesquels les opérations doivent être effectuées, une mémoire morte contenant les programmes relatifs aux fonctions de la machine, un contrôleur d'affichage, associé au microprocesseur et à la mémoire morte, un écran, d'affichage des résultats, et des moyens pour faire apparaître sur l'écran d'affichage de la machine des informations pédagogiques relatives aux règles mathématiques auxquelles est soumise l'opération effectuée par la machine, caractérisée en ce qu'elle comporte des moyens pour effectuer des opérations sur les fractions et pour commanader l'affichage du résultat sous forme non simplifiée, et en ce que l'écran de ladite machine comporte une zone d'affichage de résultats entiers ou fractionnaires et une zone d'affichage d'une première indication montrant qu'une opération de simplification peut commencer et d'une seconde indication montrant que la fraction affichée dans la zone d'affichage est simplifiable.

L'invention sera mieux comprise à l'aide de la description qui va suivre, donnée uniquement à titre d'exemple et faite en se référant aux dessins annexés, sur lesquels :

- la Fig.1 est un schéma synoptique de la machine à calculer suivant l'invention et des moyens d'affichage de résultats complexes lorsque la machine est utilisée pour effectuer une division euclidienne;
- la Fig.2 est un schéma synoptique analogue à celui de la Fig.1, montrant les moyens d'affichage de la machine utilisée pour effectuer une opération dite à opérateur constant;
- la Fig.3 est un schéma synoptique analogue aux schémas précédents, montrant les moyens d'affichage de la machine suivant l'invention utilisée pour effectuer des opérations sur des fractions; et
- la Fig.4 est une représentation du clavier de la machine suivant l'invention comprenant des touches spécifiques aux opérations particulières qu'elle est destinée à effectuer.

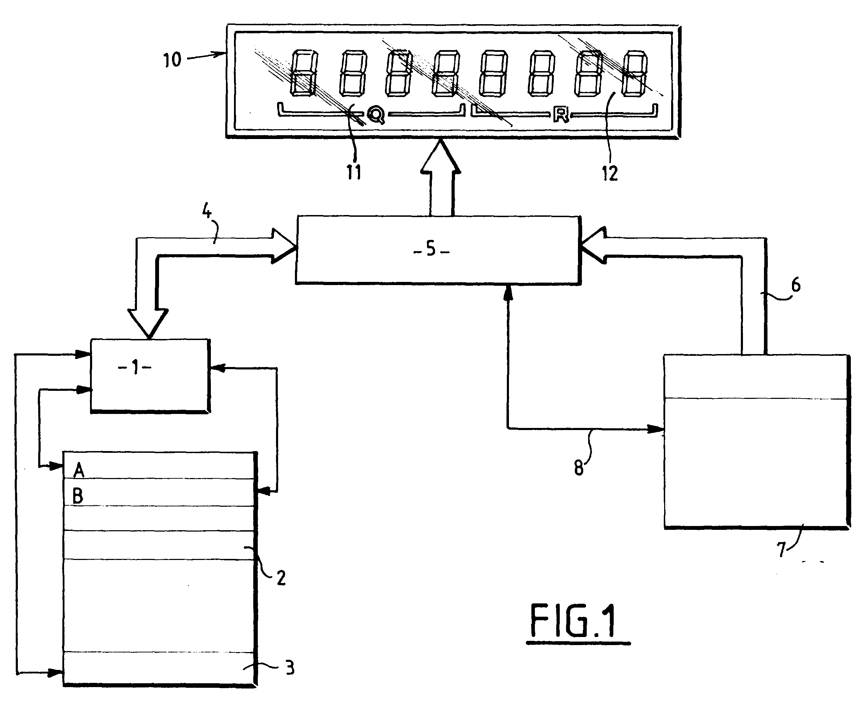

La machine à calculer dont le schéma synoptique est représenté à la Fig.1 comporte un microprocesseur 1 associé à une pile de registres à décalage 2 destinés à stocker temporairement les nombres sur lesquels une opération doit être effectuée ainsi qu'à une mémoire 3 vive destinée à stocker les données relatives à une opération en cours.

Le microprocesseur 1 communique par un bus 4 avec un contrôleur d'affichage 5 qui est relié à son tour par un bus de données et d'adresses 6 à une mémoire morte 7 contenant les données de programmation des diverses fonctions que peut réaliser la machine.

Le contrôleur d'affichage 5 est en outre connecté à la mémoire morte 7 par un conducteur de commande 8.

Enfin, le contrôleur d'affichage 5 est relié par un bus 9 à un écran 10 d'affichage des résultats dont l'organisation dépend de la nature de l'opération effectuée par la machine.

Dans le présent exemple, la machine à calculer suivant l'invention est utilisée pour effectuer une division euclidienne.

L'écran d'affichage est séparé en deux zones indépendantes 11 et 12 destinées l'une 11 à l'affichage du quotient entier de la divison et l'autre 12, à l'affichage du reste de cette division.

L'écran d'affichage 10 est un écran à huit chiffres composés chacun de sept segments.

Les quatre chiffres de la zone 11 sont affectés à l'affichage du quotient entier tandis que les quatre chiffres de la zone 12 sont affectés à l'affichage du reste de la division euclidienne.

Les deux zones 11 et 12 précitées sont indiquées respectivement par les lettres Q et R dont l'affichage nécessite l'utilisation d'un seul segment d'affichage supplémentaire.

Par conséquent, l'affichage du résultat d'une division euclidienne ne nécessite l'emploi que de $8 \times 7 = 56 + 1 = 57$ segments.

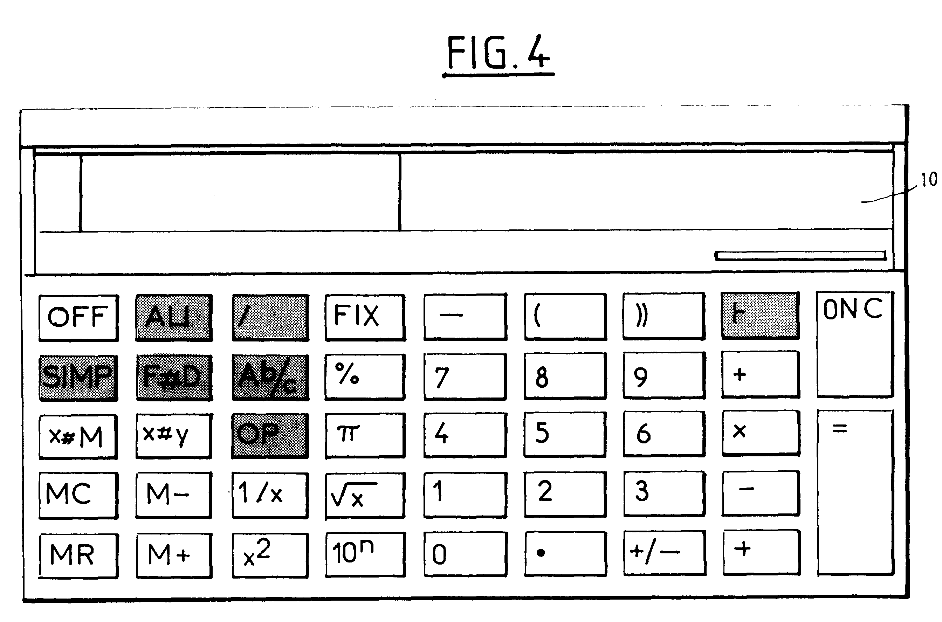

Par ailleurs, la machine à calculer comporte un clavier représenté à la Fig.4, qui présente outre les touches classiques +, -, ×, ÷, une touche ⊢ correspondant à la division euclidienne dont le programme de mise en oeuvre est stocké dans la mémoire morte 7.

Le fonctionnement de la machine pour l'exécution d'une division euclidienne va être décrit sur un exemple.

On suppose que l'on veuille diviser le nombre 14 par le nombre 5.

A l'aide du clavier de la machine, on effectue les opérations suivantes.

1) introduction du dividende D, 14, dont le stockage dans le registre 2 et l'affichage sur l'écran 10 est assuré par le microprocesseur 1.

2) enfoncement de la touche ⊢ pour appeler la fonction "division euclidienne" dans la mémoire morte 7.

Le dividende 14 reste affiché sur l'écran 10 dont l'apparence reste celle d'un écran classique.

3) introduction du diviseur d,5, qui remplace sur l'écran 10 le diviseur D.

4) enfoncement de la touche égal, =. Cette dernière manoeuvre provoque sous l'effet du programme "division euclidienne" stocké sur la mémoire morte 7 et du contrôleur d'affichage 5, l'apparition sur l'écran 10 des zones 11 et 12 d'affichage du quotient et du reste de la division euclidienne effectuée, lesdites zones étant matérialisées pour les lettres Q et R.

Dans les zones 11 et 12 apparaissent respectivement le quotient 2 et le reste 4 de la division euclidienne de 14 par 5.

L'affichage simultané de ces deux nombres permet de vérifier l'équation de la division euclidienne $D = Qd + R$ soit $R = D - Qd$.

Dès que l'on appuie sur la touche =, le microprocesseur 1 calcule le quotient entier Q et le reste D - Qd, place les deux valeurs dans deux registres différents A et B de la pile 2 et provoque en même temps l'affichage de ces deux nombres sur les zones correspondantes 11 et 12 de l'écran 10 de la manière indiquée plus haut.

L'élève voit donc apparaître sur l'écran de la machine deux données importantes destinées à mieux lui faire comprendre le mécanisme de la division.

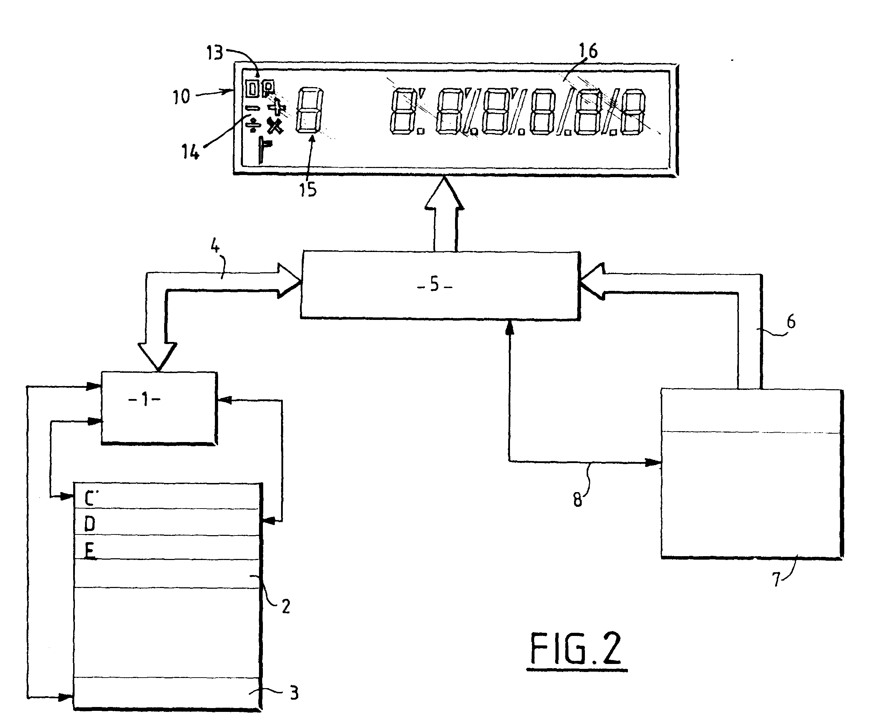

Le schéma synoptique de la Fig.2 est semblable à celui de la Fig.1.

Il ne diffère de celui-ci que par le fait que dans la pile de registres à décalage 2, on utilise trois registres.

- un premier registre C de mémorisation de l'opérateur constant.

- un second registre D de comptabilisation du nombre de fois successives de l'application de l'opérateur constant à un nombre initialement affiché.

- un troisième registre E de stockage du résultat de l'opération effectuée avec l'opérateur constant.

Par ailleurs, l'organisation de l'écran d'affichage 10 est adaptée à la nature de l'opération.

En effet, l'écran 10 comporte de gauche à droite :

- une zone 13 d'affichage du symbole "OP" indiquant que l'opération effectuée par la machine est une opération à opérateur constant.

- une zone 14 d'affichage de la nature de l'opération (., +, ÷, ×, ÷, ⊢,) liée à l'opérateur constant.

- une zone 15 à un ou deux chiffres constituant un compteur d'affichage du nombre d'opérations successives (+, -, ×, ÷, ⊢) effectuées avec l'opérateur constant.

- une zone 16 d'affichage du résultat décimal ou fractionnaire obtenu après avoir appliqué l'opérateur constant mémorisé, à un nombre affiché.

La zone du compteur 15 et la zone 16 d'affichage de résultat sont séparées par un espace (Fig.4).

Le clavier de la calculatrice comporte en outre une touche OP d'opérateur constant qui assure la sélection dans la mémoire morte 7 du programme de fonctionnement en opérateur constant.

Le fonctionnement de la machine en opérateur constant est le suivant.

Parmi les touches +, -, ×, -, ⊢, on choisit la nature de l'opération qui va être effectuée avec un opérateur constant. On enfonce alors la touche choisie.

Ensuite, on compose le nombre k destiné à constituer l'opérateur constant, puis on actionne la touche OP.

Le microprocesseur 1 interprète la donnée sélectionnée parmi les données +k, -k, ×k, ÷k, ⊢ k comme étant un opérateur qui sera indiqué par la suite par k'.

Il provoque la mémorisation de cet opérateur dans le registre C de la pile 2 de registres à décalage et sélection dans la mémoire morte 7, la fonction opérateur constant.

Il fait apparaître l'indicateur OP dans la zone 13 de l'écran 10 et dans la zone 14, le signe +, -, ×, -, ou ⊢, correspondant à la nature de l'opération choisie.

Alors dès que l'on appuie sur la touche OP ou que l'on entre la séquence k'OP, le microprocesseur 1 initialise dans la pile de registres 2, le registre D de comptabilisation du nombre d'applications de l'opérateur, ce nombre apparaissant en même temps dans la zone 15 de l'écran d'affichage 10, calcule le résultat OPk', le place dans le registre E de la pile de registres 2 et en même temps par l'intermédiaire du contrôleur d'affichage 5, commande l'affichage de ce résultat dans la zone 16 de l'écran 10.

Ensuite, le compteur D est incrémenté de 1 chaque fois que l'on appuie sur la touche OP.

On donne ci-après un exemple de fonctionnement de la machine avec un opérateur constant.

On suppose que l'opérateur choisi soit -5. Il s'agit d'introduire cet opérateur et de l'appliquer trois fois au nombre 19. Les opérations d'introduction sont exécutées comme suit.

a) on introduit le signe "-" en appuyant sur la touche correspondant du clavier (Fig.4).
b) on introduit le nombre constant 5 relatif à l'opérateur en composant ce nombre sur le clavier.
c) on appuie sur la touche OP pour mémoriser l'opérateur "OP-" soit -5.

Dans les zones 13 et 14 de l'écran apparait l'indication OP- tandis que dans la zone 16 apparaît le nombre 5. L'exécution de l'application à l'opérateur constant met en oeuvre les phases suivantes.

a) on introduit le nombre 19 auquel on veut appliquer l'opérateur constant. Ce nombre apparaît dans la zone 16 de l'écran 10.
b) on effectue une première application de l'opérateur constant en appuyant sur la touche OP.

L'opération 19-5 est effectuée par le microprocesseur 1 et dans la zone 16 de l'écran 10 apparaît le résultat de cette opération, soit 14, alors que dans la zone 15 apparaît le nombre 1 indiquant que l'application de l'opération -5 a été effectuée une fois.

Lorsqu'on appuie une nouvelle fois sur la touche OP, on provoque l'application de l'opérateur constant -5 au résultat de l'opération précédente, ce qui donne l'opération 14-5 soit 9.

Alors dans les zones 16 et 15 de l'écran 10 apparaissent respectivement le résultat, 9, et l'indication, 2, correspondant au nombre d'applications de l'opérateur constant, -5.

Lorsqu'on appuie sur la touche OP une troisième fois, on obtient de la même manière l'affichage dans les zones 15 et 16 de l'écran 10 du résultat de l'opération 9-5 soit 4 et du nombre, 3, d'application de l'opérateur constant.

On voit que l'organisation particulière de la machine suivant l'invention permet pour mémoriser l'opérateur d'entrer dans la machine d'abord l'opération, puis le nombre constant.

En ce qui concerne l'exemple qui vient d'être décrit, l'utilisateur en appuyant d'abord sur la touche, puis en composant le nombre constant à soustraire en vue de mémoriser l'opération, a conscience qu'il va demander à la machine une opération de soustraction, ce qui du point de vue pédagogique constitue un avantage important par rapport aux machines à calculer existantes dans lesquelles on introduit d'abord le nombre à soustraire et ensuite le signe.

Pour appliquer l'opérateur à un nombre x affiché, on appuie sur la touche OP, ce qui correspond à "composer" l'application f(x) alors que dans les machines classiques, on appuie sur la touche =.

La machine suivant l'invention est ici encore avantageuse du point de vue pédagogique.

L'existence d'un compteur matérialisé par la zone 15 de l'écran d'affichage permet de suivre le nombre d'opérations à opérateur constant effectuées, ce qui dans bien des cas facilite les calculs.

Parmi les applications de la machine suivant l'invention comprenant les fonctions de division euclidienne et d'opérateur constant, on peut citer la conversion d'un nombre décimal en son équivalent à base quelconque.

On suppose que le nombre décimal de départ soit noté D et la base du nombre à obtenir soit notée d.

La division euclidienne de "D" par "d" donne les relations successives suivantes.

1ère fois $\qquad D = dQ_1 + R_1$

2ème fois $\qquad = d(dQ_2 + R_2) + R_1$

3ème fois $\qquad = d((dQ_3 + R_3) + R_2) + R_1$

$\qquad \cdot \qquad\qquad \cdot$

$\qquad \cdot \qquad\qquad \cdot$

$\qquad \cdot \qquad\qquad \cdot$

$\qquad \cdot \qquad\qquad \cdot$

n-1ième fois $\qquad = d^{n-1} Q_{n-1} + d^{n-2} R_{n-1} + \ldots . dR_2 + R_1$

n ième
(Qn = 0) $\qquad = d^{n-1} R_n + d^{n-2} R_{n-1} + \ldots\ldots . dR_2 + R_1$

On va donner à titre d'exemple la conversion à l'aide de la machine suivantl'invention du nombre décimal 5969 en son équivalent à base huit.

Dans ce cas, D = 5969 et d = 8.

On va donc utiliser l'opérateur constant OP ⊦ 8.

Le calcul est effectué de la façon suivante.

```
------------------------------------------------------------------
Entrée      Touches         Affichage           Commentaires
------------------------------------------------------------------

   8                                      8

              ⊦                           8    Division eucli-
             OP         OP ⊦              8    dienne par 8 est
                                               l'opérateur cons-
                                               tant

 5969        OP         OP ⊦  746          1   noter R₁ = 1
                            --Q₁--      --R₁--

             OP         OP ⊦   93          2   noter R₂ = 2
                            --Q₂--      --R₂--

             OP         OP ⊦   11          5   noter R₃ = 5
                            --Q₃--      --R₃--

             OP         OP ⊦    1          3   noter R₄ = 3
                            --Q₄--      --R₄--

             OP         OP ⊦    0          1   noter R₅ = 5
                            --Q₅--      --R₅--
```

On arrête le calcul ici car le dernier quotient Q5 est nul.

En se référant au calcul qui précède, on voit que les restes des divisions euclidiennes successives constituent les chiffres du nombre à base huit équivalent au nombre décimal 5969 soit 13521.

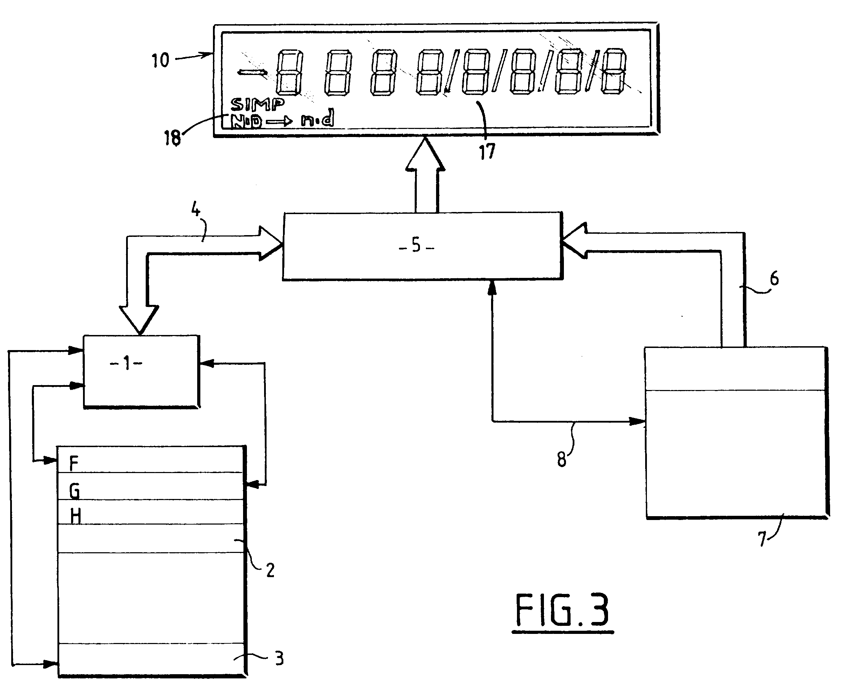

Sur la Fig.3, on a représenté le schéma synoptique de la machine suivant l'invention appliquée aux opérations sur les fractions.

Ici encore, le schéma des moyens de la machine utilisés pour effectuer des opérations sur les fractions est similaire à celui des Fig.1 et 2.

Afin de mettre en oeuvre cette fonction, la pile de registres à décalage 2 comporte un registre F de diviseur, un registre G de partie entière et un registre G de partie fonctionnaire.

Dans la mémoire morte 7 sont enregistrés :

- un programme de recherche des parties entière et fractionnaire.
- un programme de recherche du plus petit dénominateur commun.
- un programme de test de simplification (N/D $\rightarrow$ n/d) et de diviseur.

L'écran d'affichage 10 de la machine comporte une zone 17 d'affichage du résultat sous forme entière ou fractionnaire et une zone 18 d'indication de processus de simplification "SIMP" et d'affichage d'un indicateur signifiant que la fraction affichée peut être simplifiée N/D $\rightarrow$ n/d.

La mise en oeuvre de l'indicateur N/D $\rightarrow$ n/d précité est réalisée de la façon suivante.

Lorsque le résultat d'une opération effectuée par la machine apparait dans la zone 17 de l'écran 10 sous forme "fractionnaire", le microprocesseur 1 appelle dans la mémoire morte 7 le programme de test qui détermine si la fraction affichée est simplifiable.

Ce programme consiste à rechercher si le numérateur N et le dénominateur D de la fraction affichée ont un diviseur commun entier autre que 1.

Ce diviseur est alors placé dans le registre F de la pile de registres 2.

Si la fraction est réductible, il y a apparition dans la zone 18 de l'écran 10 de l'indicateur N/D $\rightarrow$ n/d en même temps que le résultat apparaît dans la zone 17.

On suppose à titre d'exemple que l'opération à effectuer soit la suivante :

$$\frac{2}{4} + \frac{1}{3} = \frac{10}{12}$$

Pour effectuer cette opération, on procède comme suit :
Introduction de 2/4

| Touche | Affichage |
|--------|-----------|
| 2 | 2 |
| / | 2/ |
| 4 | 2/4 |
| + | 2/4 |
| 1 | 1 |
| / | 1/ |
| 3 | 1/3 |
| = | N/D $\rightarrow$ n/d 10/12 |

On voit que dès que le résultat de l'opération, soit 10/12, apparaît sur l'écran, l'indicateur N/D $\rightarrow$ n/d apparaît simultanément montrant que la fraction obtenue peut être simplifiée et que le programme de test a trouvé un diviseur commun pour le numérateur N et le dénominateur D de la fraction, à savoir le nombre 2 dans le présent exemple.

Alors que les calculatrices classiques capables d'éxécuter des opérations sur les fractions donnent directement le résultat sous la forme la plus réduite, la machine suivant l'invention donne des indications sur le processus de simplification des fractions, ci qui est un avantage important du point de vue pédagogique.

L'opération de simplification peut être réalisée de deux façons :

a) Processus automatique

On utilise la touche SIMP de la machine et l'on entre la séquence SIMP, =
La calculatrice divise le numérateur N et le dénominateur D de la fraction affichée par le plus petit commun diviseur affiché dans le registre F, ce qui donne pour la fraction 10/12, le résultat 5/6.

b) Processeur indirect

L'utilisateur propose un diviseur commun pour le numérateur N et le dénominateur D de la fraction affichée.

Il entre alors dans la machine la séquence SIMP, k, =

La calculatrice teste si le numérateur et le dénominateur de la fraction sont divisibles par k.

En reprenant l'exemple ci-dessus, on suppose que l'utilisateur essaie d'appliquer à la fraction 10/12 le diviseur 5.

Il compose la séquence :

SIMP, 5, =

La machine vérifie que 5 n'est pas un diviseur commun à 10 et à 12 et le résultat 10/12 reste inchangé mais toujours accompagné de l'indicateur N/D → n/d montrant que la fraction est simplifiable.

L'utilisateur essaie alors le nombre 2, par le même processus.

Alors dans la zone 17 de l'écran d'affichage apparaît la fraction 5/6 et l'indicateur N/D → n/d disparait de la zone 18 montrant ainsi que la fraction obtenue est irréductible.

Dans le cas d'une fraction réductible plusieurs fois telle que 8/12, en fonctionnement automatique, la machine recherche toujours le plus petit diviseur commun au numérateur et au dénominateur.

Par conséquent, en partant de l'affichage N/D → n/d 8/12 sur l'écran 10 et en entrant la séquence SIMP, = on obtient d'abord N/D → n/d 4/6.

Il faut donc entrer une nouvelle fois la séquence SIMP, = pour obtenir la fraction irréductible 2/3 et voir disparaître N/D → n/d de la zone 18 de l'écran.

La calculatrice suivant l'invention a en outre la particularité de contenir des règles de calcul programmées à l'avance donnant des résultats d'opérations sur les fractions non réduits.

Dans le cas de l'addition et de la soustraction, le résultat a un dénominateur qui est le plus petit dénominateur commun des fractions.

Pour la multiplication et la division,les résultats apparaissent respectivement sous la forme suivante.

$$\frac{N1}{D1} \times \frac{N2}{D2} = \frac{N1\ N2}{D1\ D2}$$

$$\frac{N1}{D1} \div \frac{N2}{D2} = \frac{N1\ D2}{D1\ N2}$$

Ceci permet ensuite de procéder si celà est indiqué comme étant nécessaire par l'apparition simultanée de l'indicateur N/D → n/d, de procéder à la simplification du résultat de la manière indiquée plus haut.

Dans le cas de l'addition et de la soustraction, le programme de recherche du plus petit dénominateur commun aux deux termes de l'opération, contenus dans la mémoire morte 7 sera utilisé pour l'affichage du résultat.

Par exemple, dans le cas de l'opération :

$$\frac{2}{4} + \frac{1}{6} \ ,$$

le plus petit dénominateur commun, 12, est calculé par la machine et le résultat affiché est alors N/D → n/d 8/12 montrant que la fraction est réductible.

On voit que la machine suivant l'invention permet de suivre sur l'écran d'affichage le processus de calcul d'une façon proche du processus qui doit être utilisé par l'élève lorsqu'il doit effectuer l'opération à la main.

Ainsi, la machine suivant l'invention permet, tout en facilitant la tâche de l'utilisateur, de le familiariser avec les règles mathématiques qui lui sont par ailleurs enseignées.

**Revendications**

1. Machine à calculer comprenant un microprocesseur (1) assurant la commande des opérations effectuées par la machine, une pile de registres à décalage (2) associée au microprocesseur et destinée au stockage temporaire des nombres sur lesquels les opérations doivent être effectuées, une mémoire morte (7) contenant les programmes relatifs aux fonctions de la machine, un contrôleur d'affichage (5), associé au microprocesseur (1) et à la mémoire morte (7), un écran (10) d'affichage des résultats, et des moyens pour faire apparaître sur l'écran d'affichage (10) de la machine des informations pédagogiques relatives aux règles mathématiques auxquelles est soumise l'opération effectuée par la machine, caractérisée en ce qu'elle comporte des moyens (/, SIMP, F, G, H, 7) pour effectuer des opérations sur les fractions et pour commander l'affichage du résultat sous forme non simplifiée, et en ce que l'écran (10) de ladite machine comporte une zone (17) d'affichage de résultats entiers ou fractionnaires et une zone (18) d'affichage d'une première indication (SIMP) montrant qu'une opération de simplification peut commencer et d'une seconde indication (N/D → n/d) montrant que la fraction affichée dans la zone d'affichage (17) est simplifiable.

2.  Machine à calculer suivant la revendication 1, caractérisée en ce que lesdits moyens pour effectuer les opérations sur les fractions comprennent sur le clavier de la machine, une touche (/) de commande d'opérations sur les fractions destinée à appeler dans la mémoire morte (7) de la machine un programme de recherche de la partie entière et de la partie fractionnaire du résultat de l'opération effectuée et un programme de recherche du plus petit dénominateur commun des fractions sur lesquelles l'opération est effectuée et une touche (SIMP) de commande de simplification d'un résultat fractionnaire d'une opération, destinée à appeler dans ladite mémoire morte (7) un programme de test de simplification (N/D → n/d) et d'application du plus petit diviseur commun au résultat non simplifié affiché sur l'écran (10) de ladite machine et des registres (F,G,H) de ladite pile (2) de registres à décalage destinés respectivement à contenir le diviseur destiné à la simplification du résultat fractionnaire de l'opération, la partie entière et la partie fractionnaire dudit résultat.

## Patentansprüche

1.  Rechenmaschine mit einem Mikroprozessor zum Steuern (1) der von der Maschine ausgeführten Operationen, einem Stapel mit dem Mikroprozessor verbundener Schieberegister (2), die dafür vorgesehen sind, die Zahlen, an denen Operationen ausgeführt werden müssen, vorübergehend zu speichern, einem Festwertspeicher (7), der die Programme für die Funktionen der Maschine enthält, einer Anzeigesteuereinheit (5), die mit dem Mikroprozessor (1) und dem Festwertspeicher (7) verbunden ist, einem Ergebnisanzeigeschirm (10) und Mitteln, die dazu dienen, auf dem Anzeigeschirm (10) der Maschine pädagogische Informationen in bezug auf die mathematischen Regeln zu liefern, denen die von der Maschine ausgeführte Operation unterliegt, dadurch gekennzeichnet, daß sie Mittel (/, SIMP, F, G, H, 7) zum Ausführen von Operationen an Brüchen und zum Steuern der Anzeige des Ergebnisses in nichtgekürzter Form umfaßt, und dadurch, daß der Schirm (10) der Maschine eine Zone (17) zum Anzeigen von Ganzzahl- oder Bruchergebnissen und eine Zone (18) zum Anzeigen einer ersten Meldung (SIMP), die anzeigt, daß eine Kürzungsoperation beginnen kann, und einer zweiten Meldung (N/D → n/d) umfaßt, die anzeigt, daß der in der Anzeigezone (17) angezeigte Bruch gekürzt werden kann.

2.  Rechenmaschine nach Anspruch 1, dadurch gekennzeichnet, daß das Mittel zum Ausführen der Operation an den Brüchen auf der Tastatur der Maschine eine Taste (/) zum Steuern der an den Brüchen ausgeführten Operationen umfaßt, die dafür vorgesehen ist, aus dem Festwertspeicher (7) der Maschine ein Suchprogramm zum Suchen des ganzzahligen Anteils und des Bruchanteils des Ergebnisses der ausgeführten Operation und ein Suchprogramm zum Suchen des kleinsten gemeinsamen Nenners des Bruchs, an dem die Operation ausgeführt wird, aufzurufen, und eine Taste (SIMP) zur Steuerung des Kürzens eines Bruchergebnisses einer Operation umfaßt, die dafür vorgesehen ist, aus dem Festwertspeicher (7) ein Programm zum Testen auf Kürzung (N/D → n/d) abzurufen, und um den kleinsten gemeinsamen Nenner auf das nichtgekürzte auf dem Schirm (10) der Maschine angezeigte Ergebnis anzuwenden, und Register (F, G, H) des Stapels (2) aus Schieberegistern umfaßt, die dafür vorgesehen sind, den Nenner für die Kürzung des Bruchergebnisses der Operation, den ganzzahligen Anteil bzw. den Bruchanteil des Ergebnisses aufzunehmen.

## Claims

1.  Calculating machine comprising a microprocessor (1) that controls the operations carried out by the machine, a shift register stack (2) associated with the microprocessor and provided for the temporary storage of numbers on which the operations are to be carried out, a read-only memory (7) containing the programs relating to the functions of the machine, a display controller (5) associated with the microprocessor (1) and with the read-only memory (7), a screen (10) for displaying the results, and means for causing there to appear on the display screen (10) of the machine educational information relating to the mathematical rules to which the operation carried out by the machine is subject, characterised in that it comprises means (/, SIMP, F, G, H, 7) for carrying out operations on fractions and for controlling the display of the result in non-simplified form, and the screen (10) of the machine comprises a zone (17) for displaying integer or fractional results and a zone (18) for displaying a first indication (SIMP) showing that a simplification operation can commence and a second indication (N/D → n/d) showing that the fraction displayed in the display zone (17) can be simplified.

2. Calculating machine according to claim 1, characterised in that the means for carrying out the operations on fractions comprise, on the keyboard of the machine, a key (/) for controlling operations on the fractions, which key is provided for calling up, in the read-only memory (7) of the machine, a program to search for the integer part and the fractional part of the result of the operation carried out and a program to search for the lowest common denominator of the fractions on which the operation is carried out, and a key (SIMP) for controlling simplification of a fractional result of an operation, which key is provided for calling up, in the read-only memory (7), a program for simplification testing (N/D → n/d) and for applying the lowest common divisor to the non-simplified result displayed on the screen (10) of the machine, and registers (F, G, H) of the shift register stack (2) that are provided for storing the divisor for the simplification of the fractional result of the operation, the integer part and the fractional part of the result, respectively.

FIG.1

FIG.2

EP 0 303 548 B1

FIG.3

FIG.4